# EUROPÄISCHE PATENTSCHRIFT

(11) **EP 1 299 423 B1**
(45) Veröffentlichungstag und Bekanntmachung des Hinweises auf die Patenterteilung: **31.08.2005**
(21) Anmeldenummer: 01957907.7
(22) Anmeldetag: 29.06.2001
(51) Int. Cl.: C08B 31/12, C08B 35/04

(54) **VERFAHREN ZUR HERSTELLUNG VON HOCHSUBSTITUIERTER CARBOXYALKYLSTÄRKE**
METHOD FOR PRODUCING HIGHLY-SUBSTITUTED CARBOXYALKYL STARCH
PROCEDE DE PRODUCTION D'AMIDON DE CARBOXYALKYLE HAUTEMENT SUBSTITUE

(30) Priorität: 07.07.2000 DE 10033197
(43) Veröffentlichungstag der Anmeldung: 09.04.2003
(73) Patentinhaber: CHP Carbohydrate Pirna GmbH & Co. Kg, 01796 Pirna (DE); Wolff Walsrode Aktiengesellschaft, 29699 Walsrode (DE)
(72) Erfinder: VOLKERT, Bert, 14167 Berlin (DE); LOTH, Fritz, 14513 Teltow (DE); LAZIK, Waldemar, 01796 Pirna - OT Graupa (DE); KOCH, Wolfgang, 29699 Bomlitz (DE); HILD, Alexandra, 29664 Walsrode (DE)
(74) Vertreter: Pfenning, Meinig & Partner GbR
(86) Internationale Anmeldenummer: PCT/EP2001/007488
(87) Internationale Veröffentlichungsnummer: WO 2002/004525

(56) Entgegenhaltungen:
- DD-A- 15 803
- DE-A- 2 132 813
- GB-A- 781 209
- US-A- 2 599 620
- US-A- 3 629 121
- US-A- 3 652 542

## Beschreibung

Die Erfindung betrifft eine hochsubstituierte Carboxyalkylstärke die durch ein spezielles Slurry-Verfahren gewonnen wird. Diese Stärke findet Anwendung im Bereich der chemischen Industrie.

Üblicherweise wird Carboxymethylstärke dadurch hergestellt, dass man entweder Stärke in wässriger Suspension in Gegenwart von Inertsalzen und Alkalihyroxid mit Monochloressigsäure bzw. dessen Natriumsalz umsetzt oder die Stärke in einem Überschuss von wässrigem Alkali löst und die Lösung mit Monochloressigsäure bzw. dessen Natriumsalz zur Umsetzung bringt. Dabei werden Produkte mit nur niedrigen Substitutionsgraden, in der Regel < 0.25, erhalten.

Zur Herstellung von höher substituierter Carboxymethylstärke kann man die Stärke, wie in Starch/Stärke, 51, (1999) Nr. 1, 16-20 beschrieben, in DMSO auflösen, mit Alkalihydroxid alkalisieren und mit dem Natriumsalz der Monochloressigsäure umsetzen. Es wird ein Substitutionsgrad bis zu 1.68 erzielt. Ein entscheidender Nachteil der homogenen Synthesevariante ist die schwierige Aufarbeitung und Reinigung des Produktes, da es aus dem gelösten Zustand erst wieder ausgefällt werden muss.

Bekannt ist auch die Herstellung in Suspension mit wässrig-organischen Reaktionsmedien. So wird beispielsweise bei dem aus der US-PS 4 716 186 bekannten Verfahren zur Herstellung von Carboxymethylstärke die Stärke in einem wässrig-organischen Reaktionsmedium suspendiert, mit Alkalihydroxid alkalisiert und mit Monochloressigsäure carboxymethyliert. Es werden Produkte mit Substitutionsgraden bis zu 1 beansprucht, wobei experimentell nur Substitutionsgrade von max. 0.43 beschrieben werden.

Bei der in der US-PS 5 811 541 beschrieben Herstellung von Carboxymethylstärke wird die Stärke zunächst in Gegenwart von Monochloressigsäure in einem organischen Lösungsmittel suspendiert. Durch Zugabe von wässrigem Alkali wird die Stärke umgesetzt. Es ergeben sich niedrige Substitutionsgrade im Bereich bis 0.2.

Ein entsprechendes Verfahren zur Herstellung von Carboxymethylstärke mit einem höheren Substitutionsgrad bis 1.4 ist in Journal of Applied Polymer Science, Vol. 24, (1979), 2031-2040 dadurch beschrieben, dass die Umsetzung mit Monochloressigsäure in zwei kompletten Reaktionsschritten erfolgt.

Ein wesentliches Problem bei der Carboxymethylierung von Stärke zu Produkten mit hohen Substitutionsgraden ist das Problem des Verklumpens der Reaktionsprodukte während der Reaktion. Auf diesen Sachverhalt, der auf einen bestimmten Wassergehalt im Reaktor zurückzuführen ist, wird bereits in der US-PS 2 599 620 hingewiesen.

Um den Wassergehalt möglichst gering zu halten wird teilweise anstelle der Monochloressigsäure das teurere entsprechende Natriumsalz verwendet. Dadurch wird das bei der Neutralisation entstehende Neutralisationswasser ausgeschlossen.

Ein weiterer Nachteil der bekannten Verfahren ist, dass häufig keine visuell klarlöslichen Produkte entstehen.

Aufgabe der Erfindung ist ein Verfahren zur Herstellung von hochsubstituierter Carboxyalkylstärke unter Verwendung von möglichst kostengünstigen Reagenzien und Lösungsmittelsystemen bereitzustellen. Dabei soll während der Reaktion das Reaktionsgemisch nicht verklumpen und die entsprechenden Produkte sollen bei Substitutionsgraden zwischen 0.3 und 2 klar löslich sein. Unter ökonomischen und ökologischen Aspekten soll die Ausbeute möglichst hoch sein.

Die Aufgabe wird durch die kennzeichnenden Merkmale des Anspruchs 1 gelöst. Die Unteransprüche zeigen vorteilhafte Weiterbildungen auf.

Erfindungsgemäß wird somit vorgeschlagen, dass die Stärke mit Halogencarbonsäuren in einem organischwässrigen Reaktionsmedium in Gegenwart von Alkalihydroxid bis zu Substitutionsgraden von 0.3 bis 2 umgesetzt wird. Das Verfahren ist dadurch gekennzeichnet, dass man die Halogencarbonsäure zunächst in einem max. 10 % H₂O enthaltenden Reaktionsmedium löst und durch Zugabe von wasserfreiem Aikalihydroxid partiell oder vollständig neutralisiert, anschließend die Stärke in diesem Reaktionsmedium suspendiert und durch Zugabe von konzentriertem wässrigem Alkalihydroxid und/oder wasserfreiem Alkalihydroxid sowie Erhöhung der Temperatur carboxyalkyliert.

Bevorzugt wird zum Lösen der Halogencarbonsäure ein wasserfreies mit Wasser aber mischbares Medium eingesetzt.

Um in 2 %iger wässriger Lösung visuell klarlösliche Produkte zu erhalten, erweist es sich als vorteilhaft, amylopektinreiche Stärke und/oder reines Amylopektin einzusetzen. Als Stärke kann auch Kartoffel-, Weizen-, Reis-, Mais-, Gerste- oder Topicastärke oder deren Mischungen eingesetzt werden. Bei den Halogencarbonsäuren sind Monochloressigsäure, Monochlorpropionsäure und/oder Chlormalonsäure bevorzugt.

Als Reaktionsmedium eignen sich insbesondere C1-C4-Alkohole, vorzugsweise 2-Propanol. Zweckmäßig wird die Umsetzung bei einer Temperatur von 30-80 °C, vorzugsweise 35-70 °C, durchgeführt.

Zur Durchführung des erfindungsgemäßen Verfahrens wird zuerst die Halogencarbonsäure, vorzugsweise Monochloressigsäure, in dem alkoholischen Reaktionsmedium gelöst und mit wasserfreiem Alkalihydroxid partiell oder vollständig neutralisiert. Das Molverhältnis von Halogencarbonsäure zu Stärke beträgt dabei 0.5:1 bis 3:1 und das Molverhältnis von insgesamt zugesetztem Alkalihydroxid zu Halogencarbonsäure liegt zwischen 2.5:1 und 2:1.

Nach 3-4 Stunden ist die Reaktion beendet, und das Produkt wird mit 70-100 %igem Methanol, vorzugsweise 80 %ig, bis zur Chloridfreiheit gewaschen und anschließend getrocknet.

Die erfindungsgemäße Carboxyalkylierung wird bis zu einem Substitutionsgrad von 0.3-2, vorzugsweise 0.5-1.5, vorgenommen.

Da bei der vorangehenden Neutralisation der Halogencarbonsäure im Reaktionsmedium zunächst das Natriumsalz der Säure, z.B. Monochloressigsäure, ausfällt, war es für den Fachmann nicht zu erwarten, dass die heterogen vorliegenden Reaktionskomponenten in der Weise reagieren, dass hohe Substitutionsgrade bei hohen Reagenzausbeuten erzielt werden und gleichzeitig quaiitativ hochwertige Carboxyalkylstärken erhalten werden.

Das erfindungsgemäße Verfahren unterscheidet sich dadurch von den bekannten Lösungen, dass in einem Eintopfverfahren Carboxyalkylstärke mit hohen Substitutionsgraden zwischen 0.3 und 2 hergestellt werden kann.

Bevorzugt ist das Verfahren für Monochloressigsäuren, so dass Carboxymethylstärke resultiert.

Dabei ist entscheidend, dass die verwendete, im Reaktionsmedium gelöste Halogencarbonsäure, z.B. Monochloressigsäure, zunächst mit festem Natriumhydroxid partiell oder vollständig neutralisiert wird. Die anschließend zugegebene Stärke wird durch die Zugabe von wässriger Natronlauge oder wasserfreiem Alkalihydroxid carboxymethyliert. Diese Reihenfolge der Reagenz- und Substratdosierungen ermöglicht eine gute Kontrolle über den Wasserhaushalt im Reaktionsystem und verhindert dadurch das Verklumpen während der Reaktion. Im ersten Neutralisationsschritt wird festes Natriumhydroxid verwendet, um nicht zusätzlich Wasser in das System mit einzubringen. Im zweiten Schritt wird wässrige Natronlauge verwendet, weil dadurch eine bessere Verteilung als mit festem Natriumhydroxid-Plätzchen gewährleistet ist. Erfindungsgemäß kann hier auch feine Natriumhydroxid-Prills verwendet werden.

Das erfindungsgemäße Verfahren bietet weiterhin ökonomische Vorteile durch Verwendung z.B. der freien Monochloressigsäure anstelle des entsprechend teureren Natriumsalzes.

Durch die Slurry-Prozessführung ergeben sich wesentliche ökonomische Vorteile bei der Aufarbeitung und Wäsche des Produktes gegenüber der Methode in Lösung.

Bei Verwendung von amylopektinreicher Stärke oder reinem Amylopektin können Produkte erhalten werden, die in wässriger Lösung visuell klarlöslich sind.

Die Erfindung wird nachfolgend durch ein Vergleichsbeispiel und vier Ausführungsbeispiele näher erläutert.

### Beispiel 1 (Vergleichsbeispiel)

73.0 g Wachsmaisstärke (Wassergehalt 88.8 %) werden in einem geeigneten Reaktor in 600 ml 2-Propanol vorgelegt und unter laufendem Rührer mit einer Lösung von 156.4 ml 45 %igem wässrigen Natriumhydroxid versetzt. Nach 1.5 Stunden werden dann 75.6 g Monochloressigsäure zugegeben. Hierauf wird auf 50 °C aufgeheizt. Das Produkt fängt nach 1.2 Stunden an zu klumpen und kann nicht mehr gerührt werden. Der Versuch muß somit abgebrochen werden.

### Beispiel 2

56.7 g Monochloressigsäure werden in einem geeigneten Reaktor unter laufendem Rührer in 600 ml 2-Propanol gelöst und mit 24.0 g wasserfreiem Natriumhydroxid versetzt. Unter guter Durchmischung werden dann 73.0 g Wachsmaisstärke (Wassergehalt 88.8 %) zugegeben und anschließend 64.0 g 45 %iges wässriges Natriumhydroxid zugetropft. Hierauf wird auf 50 °C aufgeheizt und diese Temperatur 3 Stunden gehalten. Danach wird der Reaktor abgekühlt und das Produkt mit 50 %iger methanolischer Essigsäure neutralisiert, mit 80-100 %igem Methanol gewaschen und im Vakuumtrockenschrank getrocknet.

Es wird eine feinkörnige weiße Carboxyalkylstärke erhalten, die sich visuell klar und vollständig in Wasser löst. Der Substitutionsgrad beträgt 1.19, was einer Reagenzausbeute von 79 % entspricht. Die gemessene Viskosität einer 2 %igen wässrigen Lösung bei einer Scherrate von 2.55 s⁻¹ beträgt 5700 mPas.

### Beispiel 3

56.7 g Monochloressigsäure werden in einem geeigneten. Reaktor.unter laufendem Rührer in 600 ml 2-Propanol gelöst und mit 24.0 g wasserfreiem Natriumhydroxid versetzt. Unter guter Durchmischung werden dann 73.0 g Wachsmaisstärke (Wassergehalt 88.8 %) zugegeben und anschließend 64.0 g 45 %iges wässriges Natriumhydroxid zugetropft. Hierauf wird auf 40 °C aufgeheizt und diese Temperatur 4 Stunden gehalten. Danach wird der Reaktor abgekühlt und das Produkt mit 50 %iger methanolischer Essigsäure neutralisiert, mit 80-100 %igem Methanol gewaschen und im Vakuumtrockenschrank getrocknet.

Es wird eine feinkörnige weiße Carboxyalkylstärke erhalten, die sich visuell klar und vollständig in Wasser löst. Der Substitutionsgrad beträgt 1.13, was einer Reagenzausbeute von 75 % entspricht. Die gemessene Viskosität einer 2 %igen wässrigen Lösung bei einer Scherrate von 2.55 s⁻¹ beträgt 7800 mPas.

### Beispiel 4

56.7 g Monochloressigsäure werden in einem geeigneten Reaktor unter laufendem Rührer in 600 ml 2-Propanol gelöst und mit 24.0 g wasserfreiem Natriumhydroxid versetzt. Unter guter Durchmischung werden dann 72.4 g Kartoffelstärke (Wassergehalt 89.6 %) zugegeben und anschließend 64.0 g 45 %iges wässriges Natriumhydroxid zugetropft. Hierauf wird auf 40 °C aufgeheizt und diese Temperatur 4 Stunden gehalten. Danach wird der Reaktor abgekühlt und das Produkt mit 50 %iger methanolischer Essigsäure neutralisiert, mit 80-100 0 %igem Methanol gewaschen und im Vakuumtrokkenschrank getrocknet.

Es wird eine feinkörnige weiße Carboxyalkylstärke erhalten, die sich vollständig in Wasser löst. Der Substitutionsgrad beträgt 1.06, was einer Reagenzausbeute von 71 % entspricht. Die gemessene Viskosität einer 2 %igen wässrigen Lösung bei einer Scherrate von 2.55 s⁻¹ beträgt 2100 mPas.

### Beispiel 5 (Vergleichsbeispiel)

94.5 g Monochloressigsäure werden in einem geeigneten Reaktor unter laufendem Rührer in 700 ml 2-Propanol gelöst und mit 88.9 g 45 %iges wässriges Natriumhydroxid neutralisiert. Unter guter Durchmischung werden dann 91.3 g Wachsmaisstärke (Wassergehalt 88.8 %) und anschließend 48.0 g wasserfreies Natriumhydroxid zugegeben. Hierauf wird auf 40 °C aufgeheizt und diese Temperatur etwa 4 Stunden gehalten. Danach wird der Reaktor abgekühlt und das Produkt mit 50 %iger methanolischer Essigsäure neutralisiert, mit 80-100 %igem Methanol gewaschen und im Vakuumtrockenschrank getrocknet.

Es wird eine feinkörnige weiße Carboxyalkylstärke erhalten, die sich visuell klar und vollständig in Wasser löst. Der Substitutionsgrad beträgt 1.35, was einer Reagenzausbeute von 68 % entspricht. Die gemessene Viskosität einer 2 %igen wässrigen Lösung bei einer Scherrate von 2.55 s⁻¹ beträgt 14000 mPas.

## Patentansprüche

1. Verfahren zur Herstellung von hochsubstituierter Carboxyalkylstärke durch Umsetzung von Stärke mit Halogencarbonsäuren in einem organischwässrigen Reaktionsmedium in Gegenwart von Alkalihydroxid, **dadurch gekennzeichnet, dass** man die Halogencarbonsäure zunächst in einem, bis max. 10 % H₂O, enthaltenden Reaktionsmedium löst und durch Zugabe von wasserfreiem Alkalihydroxid partiell oder vollständig neutralisiert, anschließend die Stärke in diesem Reaktionsmedium suspendiert und durch Zugabe von konzentrierter wässriger Alkalilauge und/oder wasserfreiem Alkalihydroxid carboxyalkyliert.

2. Verfahren nach Anspruch 1, **dadurch gekennzeichnet, daß** man die Halogencarbonsäure in einem wasserfreien mit Wasser mischbaren Reaktionsmedium löst.

3. Verfahren nach Anspruch 1 oder 2, **dadurch gekennzeichnet, dass** man als Stärke Kartoffeln-, Weizen-, Reis-, Mais-, Gersten-, Tapiocastärke, oder deren Mischungen verwendet.

4. Verfahren nach Anspruch 1 bis 3, **dadurch gekennzeichnet, dass** als Stärke amylopektinreiche Stärke und/oder reines Amylopektin verwendet wird.

5. Verfahren nach Anspruch 1 bis 4, **dadurch gekennzeichnet, dass** man als Halogencarbonsäure Monochloressigsäure, Monochlorpropionsäure und/oder Chlormalonsäure bzw. deren Ester, verwendet.

6. Verfahren nach Anspruch 1 bis 5, **dadurch gekennzeichnet, dass** man als mit Wasser mischbares Reaktionsmedium C1 bis C4-Alkohole, vorzugsweise 2-Propanol, verwendet.

7. Verfahren nach Anspruch 1 bis 6, **dadurch gekennzeichnet, dass** man die Umsetzung bei Temperaturen zwischen 30 und 80 °C durchführt.

8. Verfahren nach Anspruch 7, **dadurch gekennzeichnet, dass** die Umsetzung bei 35 bis 70 °C erfolgt.

9. Verfahren nach Anspruch 1 bis 8, **dadurch gekennzeichnet, dass** das Molverhältnis von Halogencarbonsäure zu Stärke 0.5:1 bis 3:1 und das Molverhältnis von insgesamt zugesetztem Alkalihydroxid zu Halogencarbonsäure 2.5:1 bis 2:1 beträgt.

10. Verfahren nach Anspruch 1 bis 9, **dadurch gekennzeichnet, dass** man das Reaktionsprodukt gegebenenfalls neutralisiert, mit einem wasserhaltigen oder wasserfreien C1 bis C3-Alkohol auswäscht und anschließend trocknet.

## Claims

1. Process for producing highly substituted carboxyalkyl starch by reacting starch with halocarboxylic acids in an organic-aqueous reaction medium in the presence of alkali metal hydroxide, **characterized in that** the halocarboxylic acid is first dissolved in a reaction medium containing up to a max. 10% H₂O and partially or completely neutralized by addition of anhydrous alkali metal hydroxide, then the starch is suspended in this reaction medium and carboxyalkylated by addition of concentrated aqueous alkali metal hydroxide solution and/or anhydrous alkali metal hydroxide..

2. Process according to Claim 1, **characterized in that** the halocarboxylic acid is dissolved in an anhydrous water-miscible reaction medium.

3. Process according to Claim 1 or 2, **characterized in that**, as starch, use is made of potato, wheat, rice, maize, barley, tapioca starch, or mixtures thereof.

4. Process according to Claim 1 to 3, **characterized in that**, as starch, use is made of amylopectinrich starch and/or pure amylopectin.

5. Process according to Claim 1 to 4, **characterized in that**, as halocarboxylic acid, use is made of monochloroacetic acid, monochloropropionic acid and/or chloromalonic acid or esters thereof.

6. Process according to Claim 1 to 5, **characterized in that**, as water-miscible reaction medium, use is made of C1 to C4 alcohols, preferably 2-propanol.

7. Process according to Claim 1 to 6, **characterized in that** the reaction is carried out at temperatures between 30 and 80°C.

8. Process according to Claim 7, **characterized in that** the reaction is performed at 35 to 70°C.

9. Process according to Claim 1 to 8, **characterized in that** the molar ratio of halocarboxylic acid to starch is 0.5:1 to 3:1 and the molar ratio of alkali metal hydroxide added in total to halocarboxylic acid is 2.5:1 to 2:1.

10. Process according to Claim 1 to 9, **characterized in that** the reaction product is, if appropriate, neutralized, extracted by washing with an aqueous or anhydrous C1 to C3 alcohol and then dried.

## Revendications

1. Procédé de fabrication d'amidon de carboxyalkyle hautement substitué par réaction d'amidon avec des acides carboxyliques halogénés dans un milieu réactionnel organique aqueux en présence d'hydroxyde alcalin, **caractérisé en ce que** l'on dissout d'abord l'acide carboxylique halogéné dans un milieu réactionnel contenant au maximum jusqu'à 10% de H₂O et on neutralise partiellement ou totalement par addition d'hydroxyde alcalin exempt d'eau, on met ensuite en suspension l'amidon dans ce milieu réactionnel et on le carboxyalkyle par addition de lessive alcaline aqueuse concentrée et/ou d'hydroxyde alcalin exempt d'eau.

2. Procédé selon la revendication 1, **caractérisé en ce que** l'on dissout l'acide carboxylique halogéné dans un milieu réactionnel exempt d'eau miscible à l'eau.

3. Procédé selon la revendication 1 ou 2, **caractérisé en ce que** l'on utilise comme amidon, de l'amidon de pomme de terre, de blé, de riz, de mais, d'orge, de tapioca ou leurs mélanges.

4. Procédé selon une revendication 1 à 3, **caractérisé en ce que** l'on utilise comme amidon, de l'amidon riche en amylopectine et/ou de l'amylopectine pure.

5. Procédé selon une revendication 1 à 4, **caractérisé en ce que** l'on utilise comme acide carboxylique halogéné, l'acide monochloracétique, l'acide monochloropropionique et/ou l'acide chloromalonique ou leurs esters.

6. Procédé selon une revendication 1 à 5, **caractérisé en ce que** l'on utilise comme milieu réactionnel miscible à l'eau des alcools en C₁ à C₄, de préférence le 2-propanol.

7. Procédé selon une revendication 1 à 6, **caractérisé en ce que** l'on effectue la réaction à des températures entre 30 et 80°C.

8. Procédé selon la revendication 7, **caractérisé en ce que** la réaction se fait à une température de 35 à 70°C.

9. Procédé selon une revendication 1 à 8, **caractérisé en ce que** le rapport molaire de l'acide carboxylique halogéné à l'amidon est de 0,5:1 à 3:1 et le rapport molaire de l'hydroxyde alcalin ajouté au total à l'acide carboxylique halogéné est de 2,5:1 à 2:1.

10. Procédé selon une revendication 1 à 9, **caractérisé en ce que** l'on neutralise éventuellement le produit réactionnel, on le lave avec un alcool en C₁ à C₃ contenant de l'eau ou exempt d'eau et on le sèche ensuite.
